# EUROPEAN PATENT APPLICATION

(11) **EP 2 306 042 A1**
(43) Date of publication of application: **06.04.2011**
(21) Application number: 09773572.4
(22) Date of filing: 03.07.2009
(51) Int. Cl.: F16F 7/00, F16B 19/00, F16F 1/36

(54) **CUSHION CLIP**

(30) Priority: 04.07.2008 JP 2008175660
(71) Applicant: DAIWA KASEI KOGYO KABUSHIKI KAISHA, Okazaki-shi Aichi 444-0004 (JP)
(72) Inventor: UKAI Jyunya, Okazaki-shi Aichi 444-0004 (JP); IWAHARA Toshio, Okazaki-shi Aichi 444-0004 (JP)
(74) Representative: Baumgärtel, Gunnar
(86) International application number: PCT/JP2009/062204
(87) International publication number: WO 2010/001994

(57) **Abstract**

It is an object of the present invention to increase a contact area at a joint portion between a clip body and a cushion body for increasing a mutual bonding force.

Therefore, the present invention incorporates the following construction. That is, for receiving and stopping movement of a movable member approaching to a fixed member in order to absorb impacts, a cushion clip includes a clip body (10) capable of being mounted by inserting into a mounting hole formed in one of the fixed member and the movable member, and a cushion body (20) capable of absorbing impacts by resilient deformation. The clip body (10) made of rigid resin material and the cushion body (20) made of soft resin material are integrally joined to each other at a mutual joint portion (J) by a two-material molding process. At the mutual joint portion (J), the clip body (10) includes a base portion (12) entering into inside of the cushion body (20), and a concave-convex configuration, such as ribs (30), is provided to the base portion (12) for increasing a contact area with the cushion body (20).

## Description

### TECHNICAL FIELD

The present invention relates to cushion clips, and in particular to cushion clips for receiving and stopping movement of a door member relative to an automobile body-side member, for example, at various opening and closing portions of an automobile in order to absorb impacts produced when the door member is closed.

### BACKGROUND ART

Regarding this kind of cushion clips, a technique disclosed in Patent Document 1 is known. According to this technique, a clip body adapted to be mounted to a predetermine panel and a cushion body for absorbing impacts are provided. In addition, the clip body is molded by a thermoplastic resin material, and the cushion body is molded by a resilient material, such as rubber. These bodies are integrally joined to each other when they are molded. The joint portion is configured such that a disk-like base portion of the clip body is fitted into an internal space of the cushion body.

### PRIOR ART DOCUMENT

### PATENT DOCUMENT

Patent Document 1: Japanese Laid-Open Patent Publication No. 2003-130110

### SUMMARY OF THE INVENTION

### PROBLEM TO BE SOLVED BY THE INVENTION

At the joint portion between the clip body and the cushion body, a necessary bonding force must be ensured by increasing a mutual contact area within a space that is limited by an inner diameter of a mounting hole of a panel or the like or by a maximum diameter of the cushion body. However, at the joint portion between the clip body and the cushion body disclosed in the above publication, the base portion of the clip body is simply fitted into the cushion body, and therefore, it is difficult to ensure a sufficient bonding force by this construction.

The present invention is aimed to solve the above problem, and its object is to increase a contact area between a clip body and a cushion body for increasing a mutual bonding force.

### MEANS FOR SOLVING THE PROBLEM

The present invention is intended to achieve the above object and is constituted as follows.
A cushion clip includes a clip body that can be mounted by inserting into a mounting hole formed in one of a fixed member and a movable member, and a cushion body that can absorb impacts by resilient deformation, in order to receive and stop movement for absorbing impacts of the movable member approaching to the fixed member. The clip body made of rigid resin material and the cushion body made of soft resin material are integrally joined to each other at a mutual joint portion by a two-material molding process. At the mutual joint portion, the clip body includes a base portion entering into inside of the cushion body, and the base portion has a concave-convex configuration for increasing a contact area with the cushion body.
With this construction, it is possible to increase the boding force at the mutual joint portion within a space that is limited by the inner diameter of the mounting hole receiving the clip body and by the maximum diameter of the cushion body.

Preferably, the base portion at the joint portion has a plate-like configuration and the concave-convex configuration is provided by integrally molding a plurality of ribs on a surface of the base portion.
According to this construction, a contact area at the joint portion between the clip body and the cushion body is increased by the ribs. In addition, during the two-material molding process, when the cushion body is molded to be joined to the clip body after the clip body has been molded, parts of the ribs at the mutual joint portion are melted by the heat of the resin materials and enters the resin material of the cushion body, so that the boding force at the joint portion is further enhanced.

More preferably, the base portion at the joint portion has a column-like configuration and the concave-convex configuration is provided by molding a plurality of cut-out portions on an outer circumferential surface of the base portion.
With this construction, at the joint portion between the clip body and the cushion body, the column-like base portion is positioned inside of the cushion body, and additionally, the resin material of the cushion body enters the cut-out portions provided on the outer circumference of the base portion, so that the contact area between the clip body and the cushion body is increased to further enhance the bonding force at the joint portion.

Further preferably, the base portion at the joint portion has a plate-like configuration and the concave-convex configuration is provided by integrally molding a flange, which extends from an outer circumference of the base portion, on a front surface side of the base portion.
With this construction, the resin material of the cushion body is brought to the state of enclosing the flange of the base portion of the clip body, and therefore, in addition to the increase of the contact area between the clip body and the cushion body, it is possible to achieve a mutual physical connection.

Further preferably, a plurality of penetrating holes are formed in the flange of the base portion of the clip body and extend therethrough between a front side and a back side.
According to this construction, the resin material of the cushion body positioned on both front and back sides of the flange is connected through the penetrating holes in the state where the flange of the base portion of the clip body is enclosed by the resin material, and therefore, a further enhanced physical connection between the clip body and the cushion body can be achieved.

### BRIEF DESCRIPTION OF THE DRAWING

[FIG. 1] A perspective view in appearance showing a cushion clip according to a first embodiment
[FIG. 2] A vertical sectional view of the cushion clip shown in FIG. 1
[FIG. 3] A perspective view in appearance of a clip body of the cushion clip shown in FIG. 1
[FIG. 4] A plan view of the clip body shown in FIG. 3
[FIG. 5] A perspective view in appearance showing a cushion clip according to a second embodiment
[FIG. 6] A vertical sectional view of the cushion clip shown in FIG. 5
[FIG. 7] A perspective view in appearance of a clip body of the cushion clip shown in FIG. 5
[FIG. 8] A plan view of the clip body shown in FIG. 7
[FIG. 9] A perspective view in appearance showing a cushion clip according to a third embodiment
[FIG. 10] A vertical sectional view of the cushion clip shown in FIG. 9
[FIG. 11] A perspective view in appearance of a clip body of the cushion clip shown in FIG. 9
[FIG. 12] A perspective view in appearance showing a cushion clip according to a fourth embodiment
[FIG. 13] A vertical sectional view of the cushion clip shown in FIG. 12
[FIG. 14] A perspective view in appearance of a clip body of the cushion clip shown in FIG. 12

### MODES FOR CARRYING OUT THE INVENTION

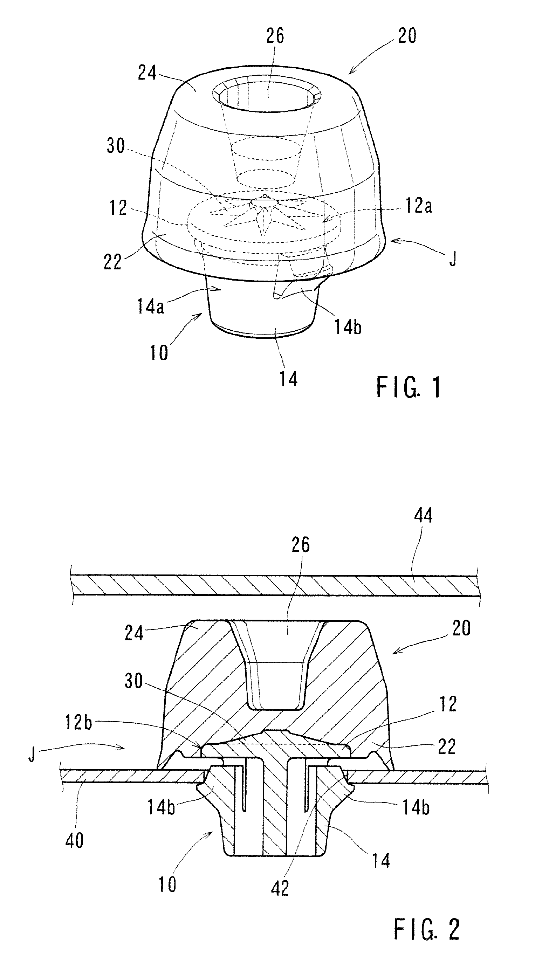

Modes for carrying out the present invention will be hereinafter described with reference to the drawings.
First, a first embodiment will be described with reference to FIGS. 1 to 4.
A cushion clip shown in FIGS. 1 and 2 is adapted to be mounted to an automobile body-side member 40 at a door opening and closing portion of an automobile (see FIG. 2) in order to absorb impacts produced when a door member 44 is closed. The automobile body-side member 40 and the door member 44 correspond to a "fixed member" and a "movable member" of the present invention, respectively. The cushion clip may be mounted to the door member 44 (movable member) depending on the position of use.

In construction, the cushion clip is generally divided into a clip body 10 molded by a rigid resin material, such as polypropylene (PP), and a cushion body 20 molded by a soft resin material, such as elastomer. The clip body 10 and the cushion body 20 are integrally bonded at a mutual joint portion J by a two-material (two-color) molding process. The clip body 10 is adapted to mount the cushion clip to the automobile body-side member 40, and the cushion member 20 is adapted to absorb impacts by receiving and stopping the door member 44.

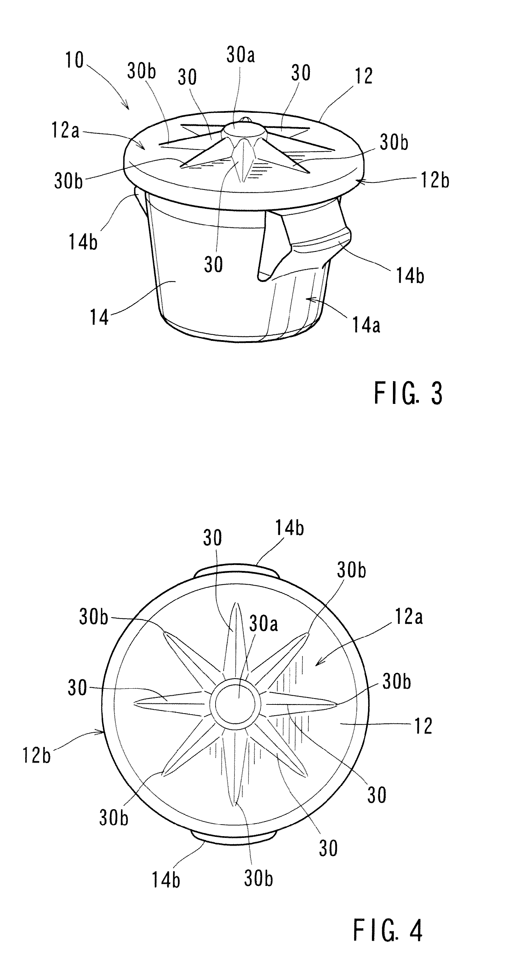

The clip body 10 has a disk-like base portion 12, from which a cylindrical tubular anchor portion 14 extends downward as viewed in the drawing. The base portion 12 constitutes a part of the joint portion J on the side of the clip body 10, and a surface 12a of the base portion 12 is molded with a plurality of ribs 30 constituting a concave-convex configuration. The ribs 30 extend radially from a central projection 30a positioned at a central portion of the surface 12a (see FIGS. 3 and 4). Each of the ribs 30 has a triangular cross sectional configuration and has a cross sectional area that decrease from the central projection 30a toward a leading end 30b of each rib 30.

The anchor portion 14 can be inserted into a mounting hole 42 that is formed in the automobile body-side member 40 (see FIG. 2), and an outer wall surface 14a of the anchor portion 14 is configured as a tapered surface having a diameter decreasing from the side of the base portion 12 toward a leading end. Engaging claws 14b are positioned on opposite sides of the anchor portion 14. As the anchor portion 14 is inserted into the mounting hole 42 of the automobile body-side member 40, the engaging claws 14b are pressed and flexed inwardly to pass through the mounting hole 42 and then engage the edge portion of the mounting hole 42 on the inner side of the automobile body-side member 40 (see FIG. 2). This may join the clip body 10 to the automobile body-side member 40.

The cushion body 20 has a bottom portion 22 constituting the mutual joint portion J together with the base portion 12 of the clip body 10 and has a top portion 24 that can receive and stop the door member 44. A circular opening 26 is formed in the central portion of the top portion 24 for tuning the resilient characteristic of the cushion body 20. Thus, by changing the horizontal cross sectional area or the depth of the opening 26, it is possible to adjust the softness when the cushion body 20 absorbs impacts.

As described previously, the clip body 10 and the cushion body 20 are integrally bonded to each other at the mutual joint portion J by the two-material molding process using corresponding resin materials. Thus, at the joint portion J, the surface 12a and a circumferential face 12b of the base portion 12 of the clip body 10 are integrated with the bottom portion 22 of the cushion body 20 in a state of being enclosed by the latter. By using the two-material molding process in this way, it is possible to use PP or the like suitable to maintain the mounting strength to the automobile body-side member 40 for the clip body 10 and to use elastomer or the like suitable to provide impact absorption property for the cushion body 20.

As described previously, on the base portion 12 of the clip body 10 at the joint portion J, a concave-convex configuration is provided by the plurality of ribs 30 molded on its surface 12a. With this, a contact area between the base portion 12 of the clip body 10 and the bottom portion 22 of the cushion body 20 is increased. Therefore, it is possible to increase the bonding force at the joint portion J between the clip body 10 and the cushion body 20 within a space that is limited by the maximum diameter of the cushion body 20 and the mounting hole 42 of the automobile body-side member 40.
In addition, in general, during the two-material molding process of the clip body 10 and the cushion body 20, the clip body 10 is first molded, for example, by PP, and the cushion body 20 is then injection-molded, for example, by elastomer, using a mold in which the base portion 12 is set into the mold. During molding of the cushion body 20, the leading ends 30b of the ribs 30, etc. having a small cross sectional area are melted by the heat of the elastomer material, so that a state where PP irregularly enters the elastomer material is resulted. With this, the boding force at the joint portion J between the clip body 10 and the cushion body 20 is further increased.

As described previously, by inserting the anchor portion 14 into the mounting hole 42 of the automobile body-side member 40, the clip body 10 is joined to the automobile body-side member 40, and as a result, the cushion clip is mounted to the automobile body-side member 40 (see FIG. 2). Therefore, when the door member 44 is closed, the cushion body 20 receives and stops the door member 44, and impacts can be absorbed by the compression deformation of the cushion body 20.
When the cushion body is repeatedly resiliently deformed, a force may be applied to the joint portion J between the clip body 10 and the cushion body 20 to urge them to peel off from each other. However, because the contact area at the joint portion J between the clip body 10 and the cushion body 20 is increased as described above, the bonding state at the joint portion J is maintained.

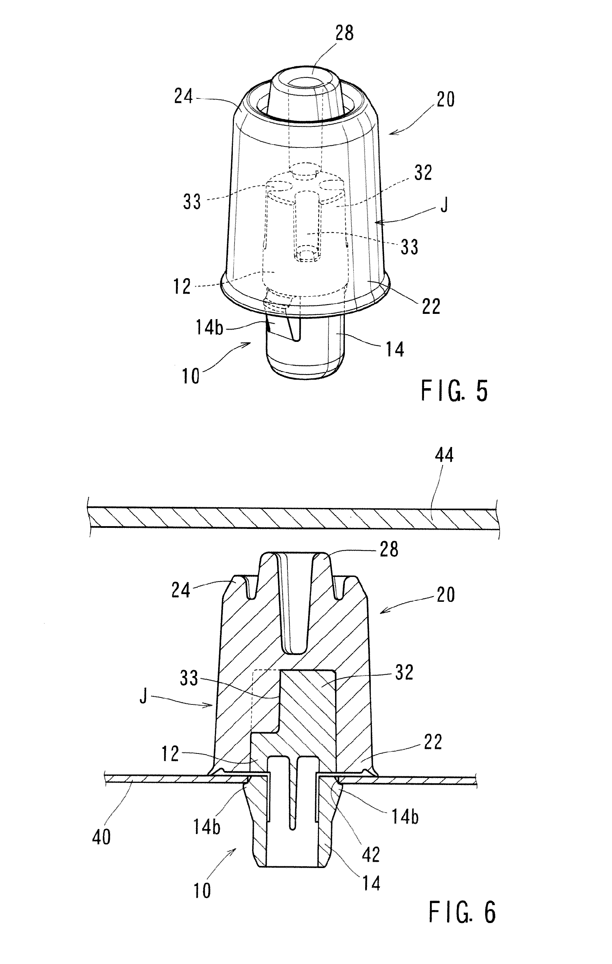

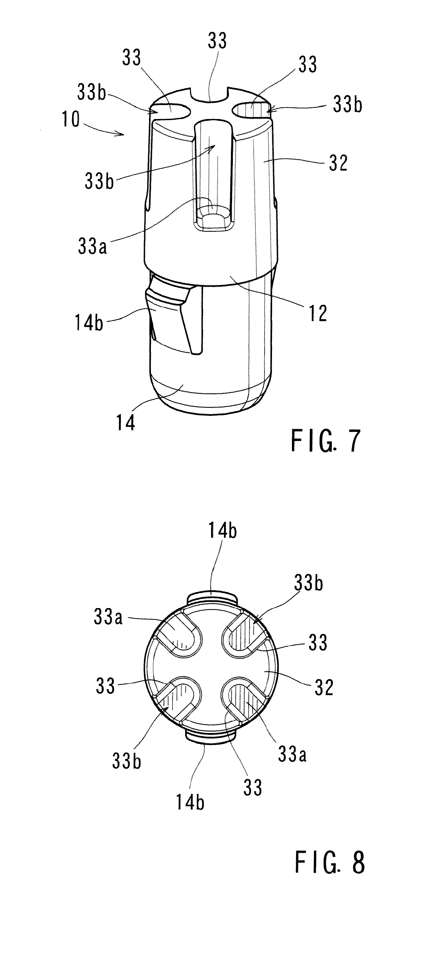

Next, a second embodiment of the present invention will be described with reference to FIGS. 5 to 8. A cushion clip shown in these figures has the cushion body 20 that has a vertically elongated configuration in comparison with the cushion clip of the previously described first embodiment and cushion clips of third and forth embodiments that will be described later. In this connection, the base portion 12 of the clip body 10 has a column-like extension portion 32 entering inside of the cushion body 20, and a plurality of cut-out portions 33 constituting a concave-convex configuration are formed on the outer circumferential surface of the extension portion 32 (see FIGS. 7 and 8). Each of the cut-out portions 33 has an open surface 33b except for a bottom surface 33a, and the open surface 33b is opened at the circumferential surface and the end surface of the extension portion 32.
Incidentally, the cushion body 20 of the second embodiment is provided with a tubular low buffering portion 28 protruding from the top portion 24. The low buffering portion 28 initially receives and stops the door member 44 shown in FIG. 6 so as to be deformed, and thereafter, the body portion of the cushion body 20 deforms to absorb impacts.

At the joint portion J between the clip body 10 and the cushion body 20, which are joined by the two-material molding process, the extension portion 32 of the base portion 12 is enclosed within inside of the cushion body 20. In addition, elastomer or the like that is the material of the cushion body 20 enters the cut-out portions 33, so that the contact area between the clip body 10 and the cushion body 20 is increased. Therefore, it is possible to increase the bonding force at the joint portion J between the clip body 10 and the cushion body 20.
The bottom surface 33a of each of the cut-out portions 33 prevents elastomer or the like, which has entered the cut-out portions 33 during the previously described injection molding process of the cushion body 20, from flowing out of the mold or toward the side of the anchor portion 14.

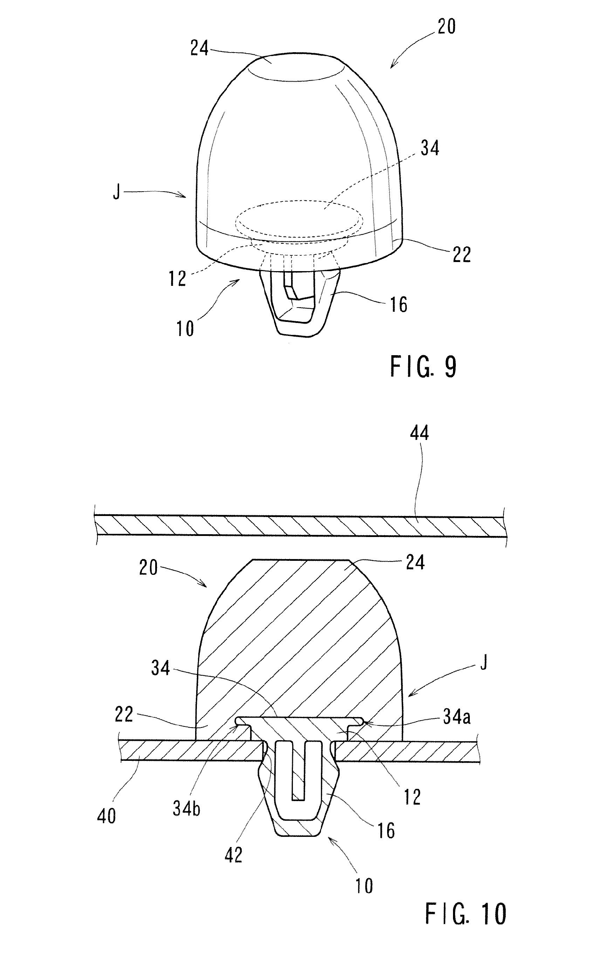

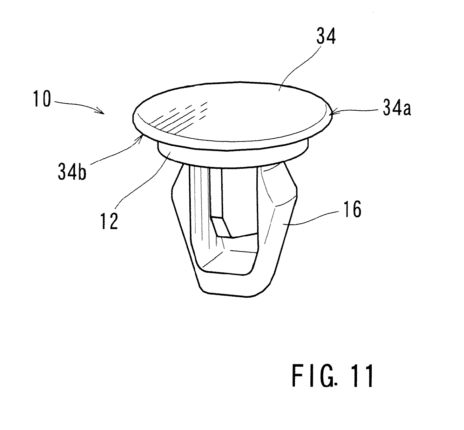

Next, a third embodiment of the present invention will now be described with reference to FIGS. 9 to 11. In the case of a cushion clip shown in these figures, a concave-convex configuration of the base portion 12 is provided by integrally molding a flange 34, which extends from the outer circumference of the base portion 12, with the base portion 12 of the clip body 10. With this concave-convex configuration, a step is formed between the outer circumferential portion of the base portion 12 and the flange 34, and this step portion is enclosed by the elastomer material of the cushion body 20 (see FIG. 10).
Thus, at the joint portion J between the clip body 10 and the cushion body 20, the elastomer material turns from the front surface side of the flange 34 toward the back surface side (lower surface side) (see FIG. 10). Therefore, in addition to the increase of the mutual contact area at the joint portion J, the base portion 12 of the clip body 10 and the bottom portion 22 of the cushion body 20 are physically joined, so that they are further firmly integrated with each other.

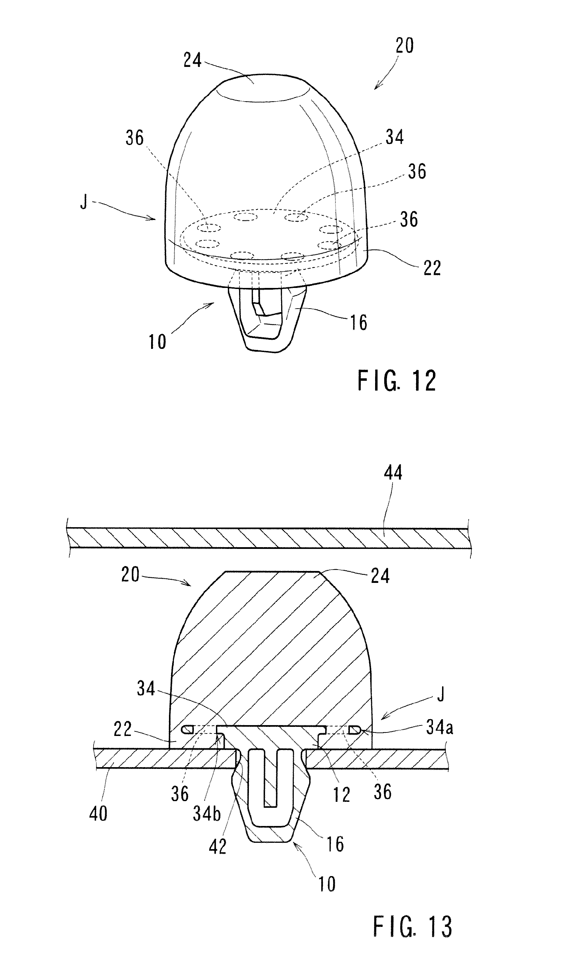

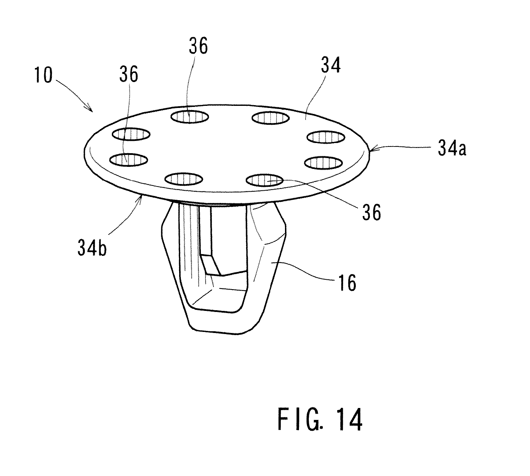

Next, a fourth embodiment of the present invention will now be described with reference to FIGS. 12 to 14.
In the case of a cushion clip shown in these figures, the flange 34 is formed integrally with the base portion 12 in the same manner as the clip body 10 of the previously described third embodiment, and additionally, a plurality of penetrating holes 36 are formed in the flange 34 to extend therethrough between the front side and the backside in order to provide a concave-convex configuration to the base portion 12. The penetrating holes 36 are arranged along the circumferential direction on the outer circumferential side of the flange 34.
With this arrangement, a step is provided between the outer circumferential portion of the base portion 12 and the flange 34 similar to the case of the third embodiment, and the front surface side and the back surface side of the flange 34 communicate with each other by the penetrating holes 36 at a position adjacent to the step. Therefore, at the joint portion J between the clip body 10 and the cushion body 20, the elastomer material turned from the front surface side toward the back surface side of the flange 45 is connected through the penetrating holes 36 (see FIG. 13). As a result, the physical connection between the base portion 12 of the clip body 10 and the bottom portion 22 of the cushion body 20 is further enhanced than in the case of the third embodiment.

Incidentally, according to the cushion clips of the third and fourth embodiments, an anchor portion 16 having a configuration of a ship bottom is incorporated into the clip body 10 in place of the cylindrical tubular anchor portion 14 of the clip body 10. In addition, regarding the cushion body 20, the opening 26 of the first embodiment is omitted. These modifications are selectively chosen depending on change of type to adapt to the position of use of the cushion clip and are not related to the gist of the present invention.

### DESCRIPTION OF NUMERALS

- 10: clip body
- 12: base portion
- 12a: surface
- 20: cushion body
- 22: bottom portion
- J: joint portion
- 30: rib (concave-convex configuration)
- 40: automobile body-side member (fixed member)
- 42: mounting hole
- 44: door member (movable member)

## Claims

1. A cushion clip comprising a clip body capable of being mounted by inserting into a mounting hole formed in one of a fixed member and a movable member, and a cushion body capable of absorbing impacts by resilient deformation, in order to receive and stop movement and absorbing impacts of the movable member approaching to the fixed member,
wherein the clip body made of rigid resin material and the cushion body made of soft resin material are integrally joined to each other at a mutual joint portion by a two-material molding process; the clip body at the joint portion includes a base portion entering into inside of the cushion body; and a concave-convex configuration for increasing a contact area with the cushion body is provided to the base portion.

2. The cushion clip as in claim 1, wherein the base portion of the clip body at the joint portion has a plate-like configuration, and the concave-convex configuration is provided by integrally molding a plurality of ribs on a surface of the base portion.

3. The cushion clip as in claim 1, wherein the base portion of the clip body at the joint portion has a column-like configuration, and the concave-convex configuration is provided by molding a plurality of cut-out portions on an outer circumferential surface of the base portion.

4. The cushion clip as in claim 1, wherein the base portion of the clip body at the joint portion has a plate-like configuration, and the concave-convex configuration is provided by integrally molding a flange, which extends from an outer circumference of the base portion, on a front surface side of the base portion.

5. The cushion clip as in claim 4, wherein a plurality of penetrating holes are formed in the flange of the base portion of the clip body and extend therethrough between a front side and a back side.
